# EUROPEAN PATENT APPLICATION

(11) **EP 1 065 235 A2**
(43) Date of publication of application: **03.01.2001**
(21) Application number: 00305516.7
(22) Date of filing: 30.06.2000
(51) Int. Cl.: C08G 77/54

(54) **Silicon-containing aromatic polymer and method for the synthesis thereof**

(30) Priority: 30.06.1999 JP 18476399
(71) Applicant: Dow Corning Toray Silicone Co., Ltd., Tokyo (JP)
(72) Inventor: Kobayashi, Hideki, Dow Corn. Toray Silic. Co. Ltd., Ichihara-shi, Chiba Prefecture (JP); Masatomi, Toru, Dow Corning Toray Silic. Co. Ltd., Ichihara-shi, Chiba Prefecture (JP)
(74) Representative: Kyle, Diana

(57) **Abstract**

To provide a novel silicon-containing aromatic polymer whose main chain is built up from silicon and an organic group that contains at least 1 nitrogen atom and at least 3 six-membered aromatic rings. Also, to provide a method for synthesizing this novel silicon-containing aromatic polymer.

Silicon-containing aromatic polymer that characteristically has a weight-average molecular weight no greater than 1,000,000 and a main chain as defined by units of the general formula (F1) 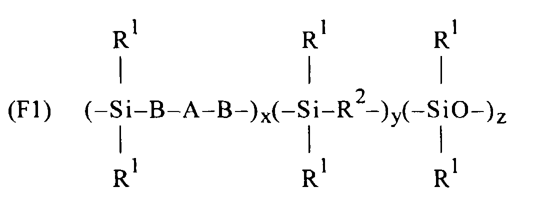 wherein A denotes a divalent organic group that contains at least 1 nitrogen atom and at least 3 six-membered aromatic rings, B denotes C₂ to C₆ alkylene, R¹ denotes unsubstituted and halogen-substituted C₁ to C₁ monovalent hydrocarbon groups that lack aliphatic unsaturation, R² is an alkyleneoxyalkylene group or an unsubstituted or alkoxy-substituted C₂ to C₁₀ divalent hydrocarbon group, the subscript **x** is an integer with a value of at least 1, the subscripts **y** and **z** are each integers with a value of at least 0, and (**y** + **z**) is at least 2. Also, a method for synthesizing the above-described novel silicon-containing aromatic polymer.

## Description

This invention relates to a novel silicon-containing aromatic polymer and to a method for the synthesis thereof. More particularly, this invention relates to a novel silicon-containing aromatic polymer that contains a charge-transporting group, such as an aromatic amine group, and to a method for the synthesis of this novel silicon-containing aromatic polymer.

Within the realm of polymers whose main chain is built up from silicon and a plural number of aromatic rings, compounds, for example, with the following structure 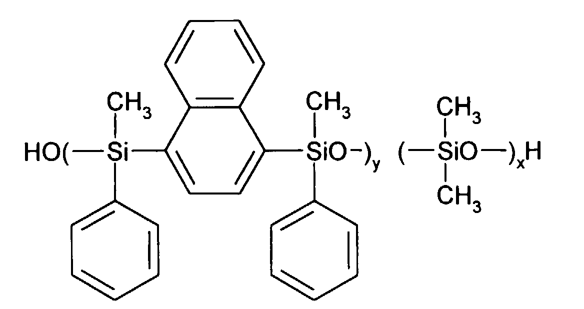 are known (High Temperature Siloxane Elastomers, by Petar R. Dvornic and Robert W. Lenz, published in 1990 by Huthig & Wepf Verlag Basel, Heidelberg, New York, p. 113 - p. 120). Heretofore unknown, however, are polymers in which the silicon atoms are bonded to each other across an organic group that contains nitrogen and a plural number of aromatic rings.

### Problems to Be Solved by the Invention

The present inventors achieved this invention as a result of extensive research.

More specifically, the object of this invention is to provide a novel silicon-containing aromatic polymer whose main chain is built up from silicon and an organic group that contains at least 1 nitrogen atom and at least 3 six-membered aromatic rings (a six membered ring is a benzene ring). An additional object of this invention is to provide a method for synthesizing this novel silicon-containing aromatic polymer.

### BRIEF SUMMARY OF THE INVENTION

This invention relates to a silicon-containing aromatic polymer comprising a polymer having a weight-average molecular weight no greater than 1,000,000 and a main chain as defined by units of the general formula (F1) 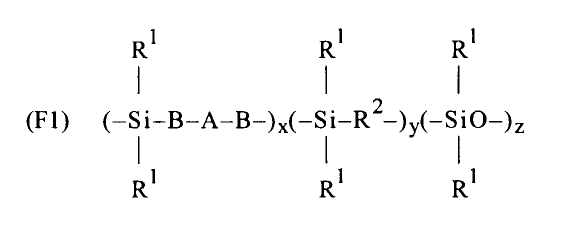 wherein A denotes a divalent organic group selected from the following structures 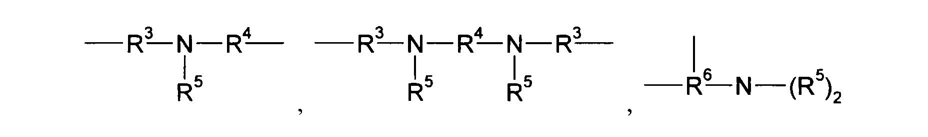 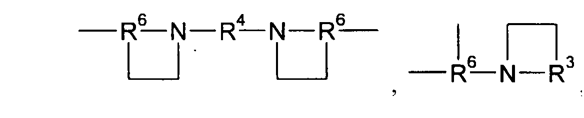 or 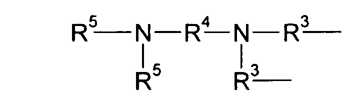 in which R³ and R⁴ denote substituted and unsubstituted divalent hydrocarbon groups, R⁵ denotes substituted and unsubstituted monovalent hydrocarbon groups, and R⁶ denotes substituted and unsubstituted trivalent hydrocarbon groups, wherein at least 1 of the preceding is an aromatic hydrocarbon ring-containing group and A contains a total of at least 3 six-membered aromatic rings, and
B denotes C₂ to C₆ alkylene, R¹ denotes unsubstituted and halogen-substituted C₁ to C₁₀ monovalent hydrocarbon groups that lack aliphatic unsaturation, R² is an alkyleneoxyalkylene group or an unsubstituted or alkoxy-substituted C₂ to C₁₀ divalent hydrocarbon group, the subscript **x** is an integer with a value of at least 1, the subscripts **y** and **z** are each integers with a value of at least 0, and (**y** + **z**) is at least 2.

This invention also relates to a method for synthesizing the above-described silicon-containing aromatic polymer comprising effecting addition polymerization in the presence of a hydrosilylation catalyst between an aromatic compound with general formula (F2)

(F2) B¹-A-B¹

wherein A denotes a divalent organic group selected from the following structures 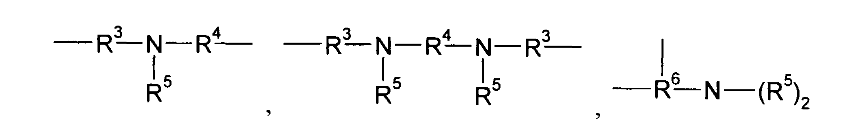 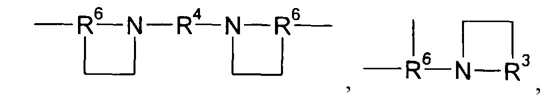 or 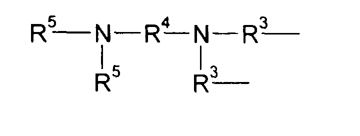 in which R³ and R⁴ denote substituted and unsubstituted divalent hydrocarbon groups, R⁵ denotes substituted and unsubstituted monovalent hydrocarbon groups, and R⁶ denotes substituted and unsubstituted trivalent hydrocarbon groups, wherein at least 1 of the preceding is an aromatic hydrocarbon ring-containing group and A contains a total of at least 3 six-membered aromatic rings and
B¹ denotes C₂ to C₆ alkenyl
and
an organosilicon compound with general formula (F3) 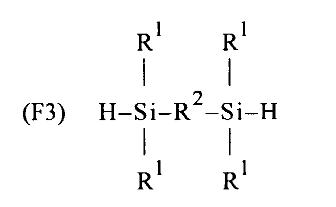 in which R¹ denotes unsubstituted and halogen-substituted C₁ to C₁₀ monovalent hydrocarbon groups that lack aliphatic unsaturation and R² is an alkyleneoxyalkylene group or an unsubstituted or alkoxy-substituted C₂ to C₁₀ divalent hydrocarbon group
or
a disiloxane compound with general formula (F4) 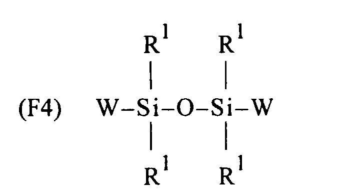 in which R¹ denotes unsubstituted and halogen-substituted C₁ to C₁₀ monovalent hydrocarbon groups that lack aliphatic unsaturation and W is the hydrogen atom or C₂ to C₆ alkenyl.

### BRIEF DESCRIPTION OF THE SEVERAL VIEWS OF THE DRAWINGS

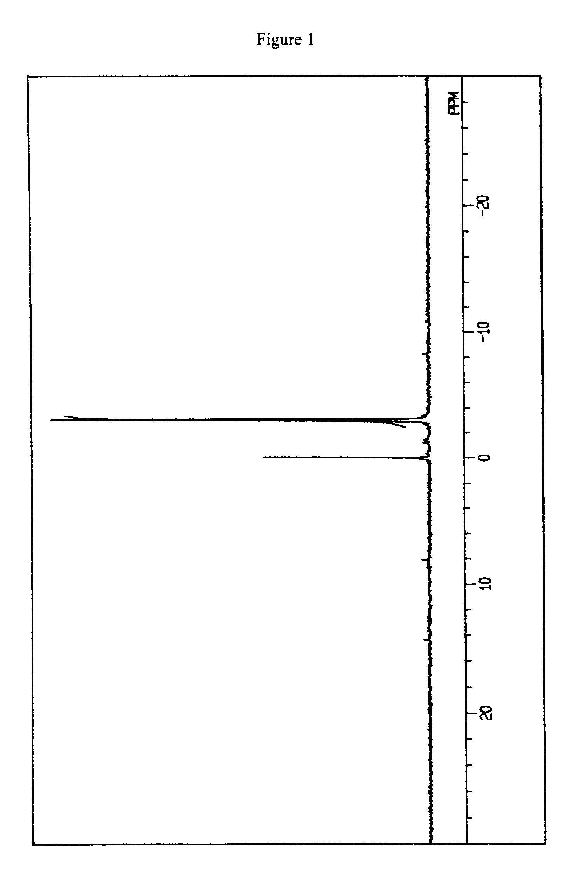

Figure 1 contains the ²⁹Si-NMR chart of the silicon-containing aromatic polymer synthesized in Example 1.

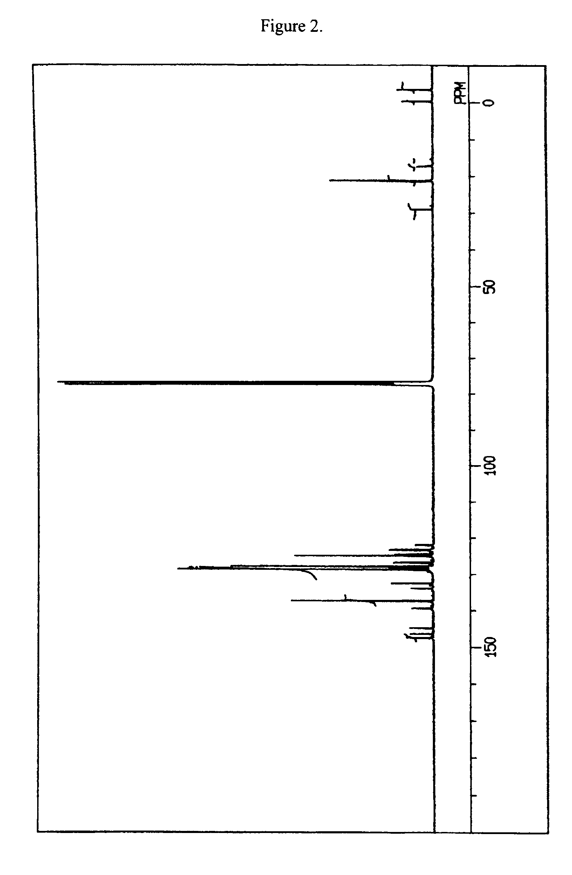

Figure 2 contains the ¹³C-NMR chart of the silicon-containing aromatic polymer synthesized in Example 1.

### DETAILED DESCRIPTION OF THE INVENTION

The invention will be explained in detail in the following with the silicon-containing aromatic polymer encompassed by this invention being explained first.

The main chain of the silicon-containing aromatic polymer of this invention is a polymeric compound with units of the general formula (F1). 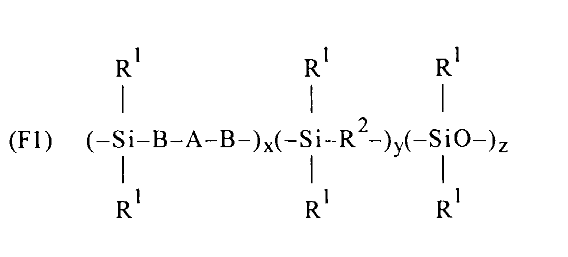 The group A in (F1) denotes a divalent organic group that contains at least 1 nitrogen atom and at least 3 six-membered aromatic rings and is selected from groups with the following structures. 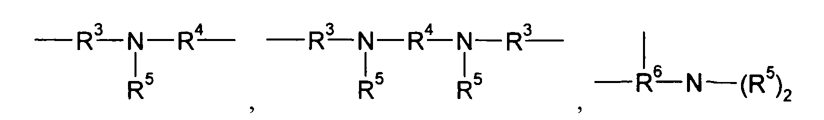 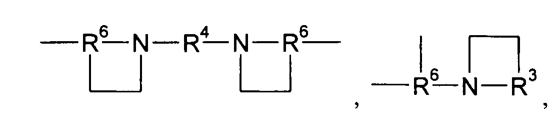 or 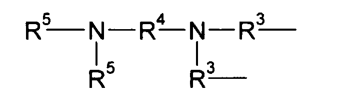 in which R³ and R⁴ in the preceding structures denote substituted and unsubstituted divalent hydrocarbon groups, R⁵ denotes substituted and unsubstituted monovalent hydrocarbon groups, and R⁶ denotes substituted and unsubstituted trivalent hydrocarbon groups. At least 1 of the preceding must be an aromatic hydrocarbon ring-containing group, and in addition the group A must contain a total of at least 3 six-membered aromatic rings. Each of R³ through R⁶ contains a six-membered aromatic ring in a preferred embodiment of these hydrocarbon groups, for example, R³ and R⁴ can be arylene, R⁵ can be aryl, and R⁶ can be an aromatic hydrocarbon ring-containing group. A portion of the hydrogen in the aromatic rings in R³ through R⁶ may be substituted by, for example, halogen, alkoxy, or alkyl such as methyl and ethyl. For the purposes of this invention, naphthalene is scored as having 2 six-membered aromatic rings. Divalent organic group A of this invention is preferably a group known as a charge-transporting group, wherein within the context of this invention "charge-transporting" denotes the capacity to transport electric charge. The charge-transporting groups encompassed by A preferably have an ionization potential no greater than 6.2 eV and particularly preferably have an ionization potential in the range from 4.5 eV to 6.2 eV. The bases for these values are as follows: an ionization potential in excess of 6.2 eV serves to inhibit charge injection and thereby facilitate charge accumulation (charging), while the polymer becomes very susceptible to oxidation, and hence very susceptible to degradation, at an ionization potential below 4.5 eV. The ionization potential can be measured by atmospheric photoelectron analysis using an AC-1 surface analyzer from Riken Keiki, Tokyo, Japan. The divalent organic group A can be specifically exemplified by imidazole derivatives, the derivatives of a triarylamine such as triphenylamine, 9-(p-diethylaminostyryl)anthracene derivatives, 1,1 -bis(4-dibenzylaminophenyl)propane derivatives, and groups with the following structures in which Me = methyl, Et = ethyl, Bu = butyl, Pr = propyl, Ph = phenylene, and the bond to the center of the benzene ring shows the bond can be in any position, ortho, meta, or para. 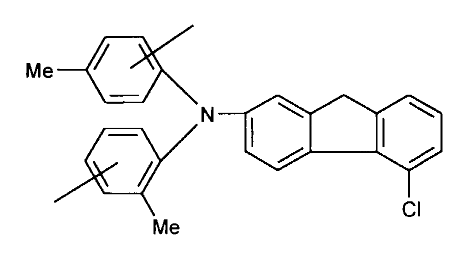 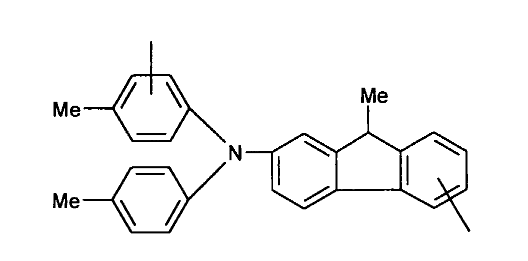 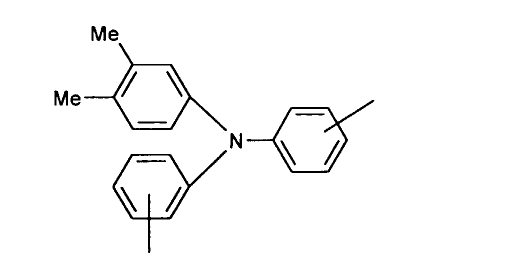 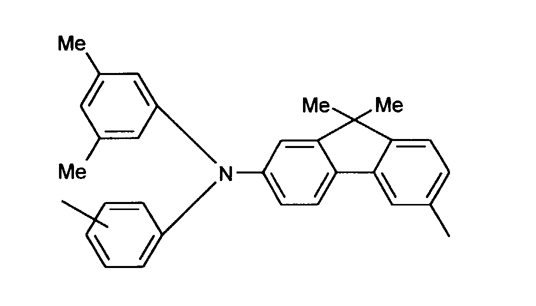 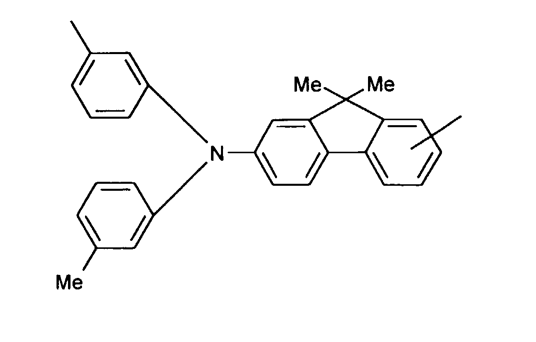 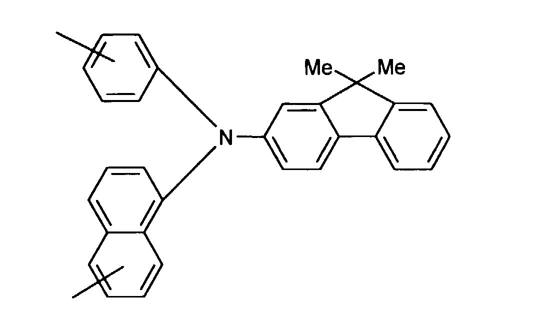 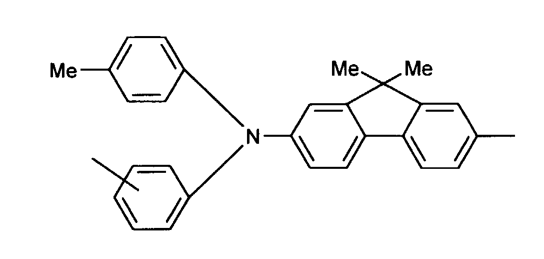 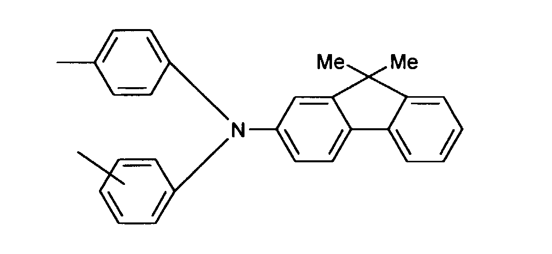 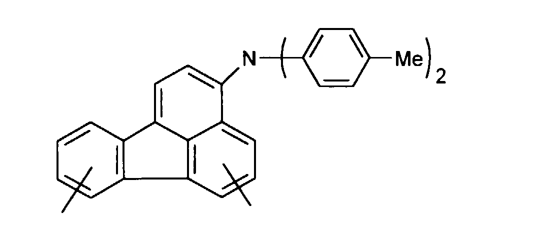 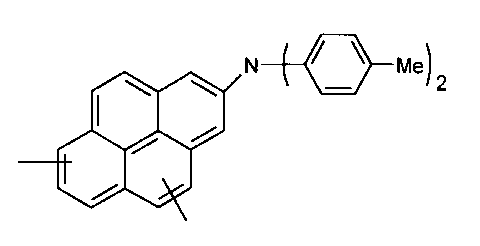 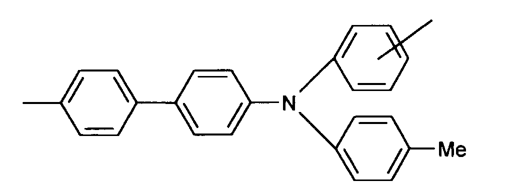 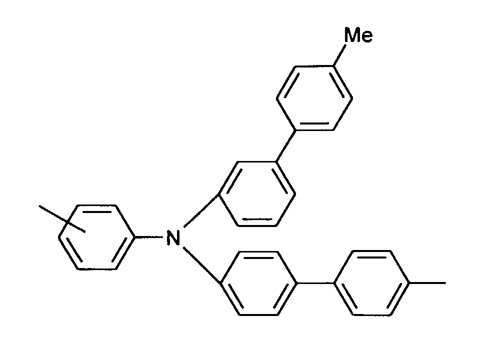 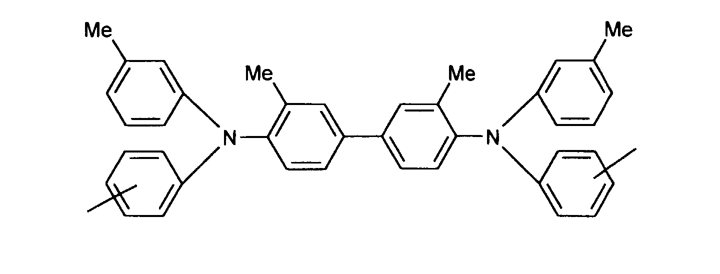 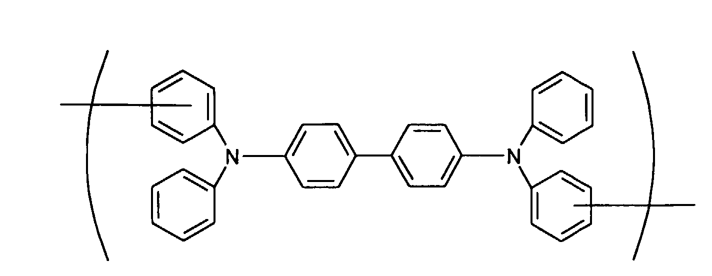 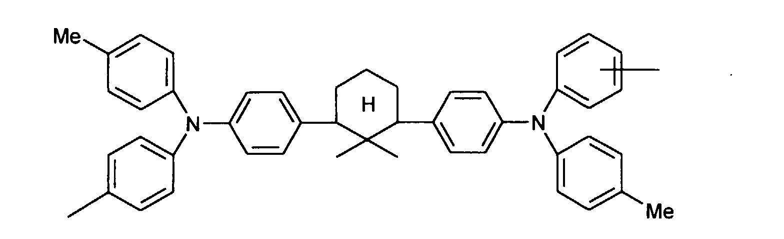 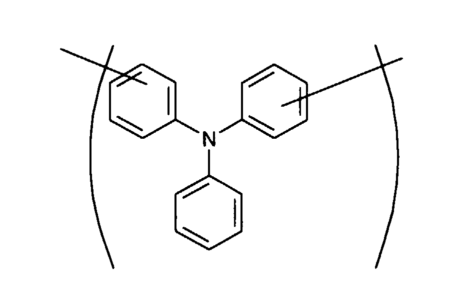 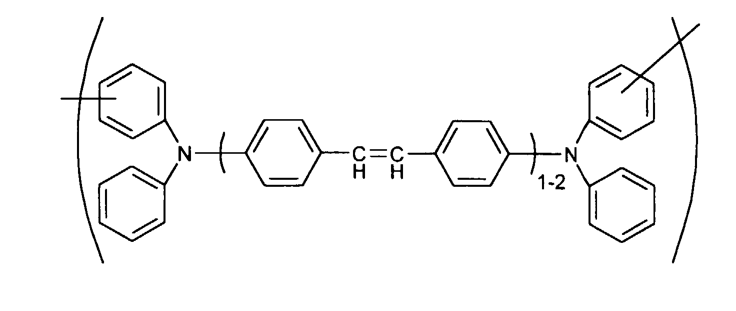 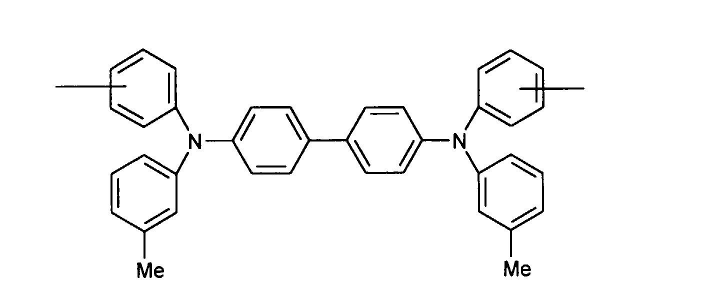 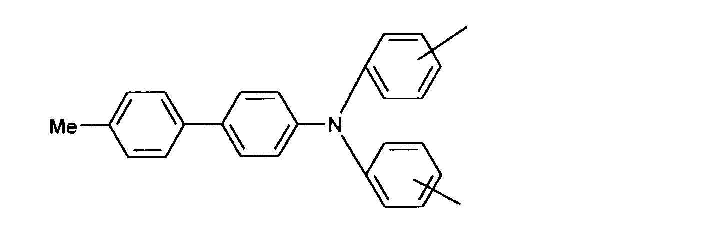 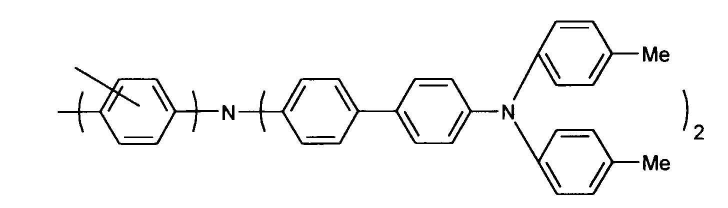 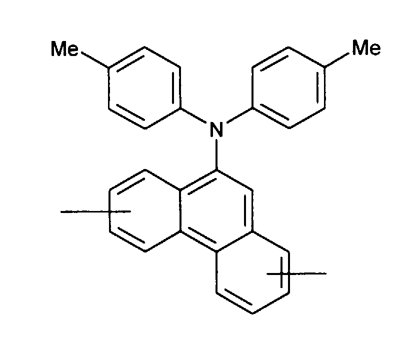 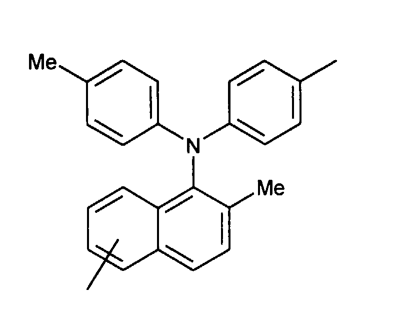 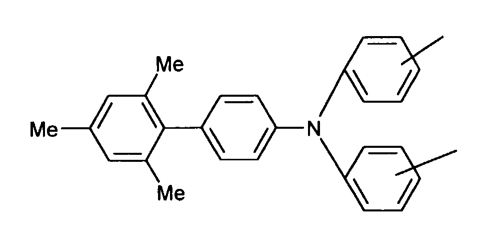 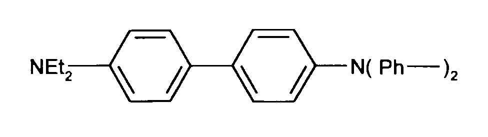 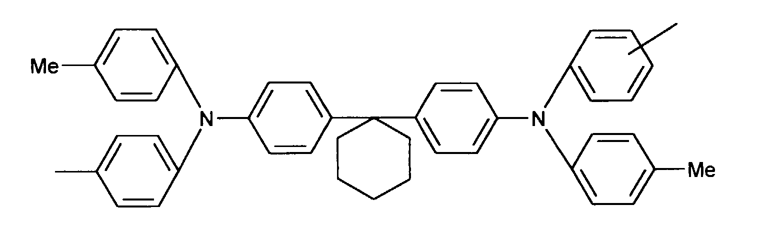 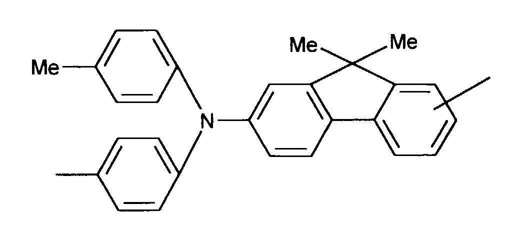 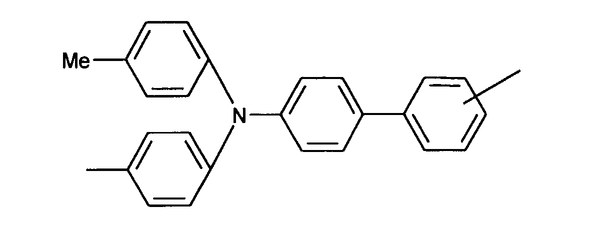 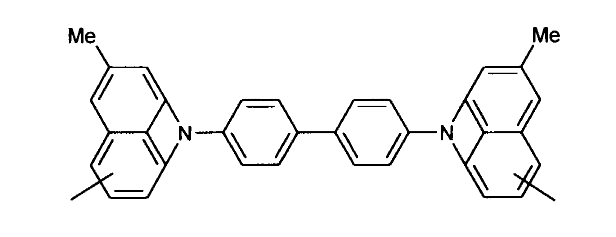 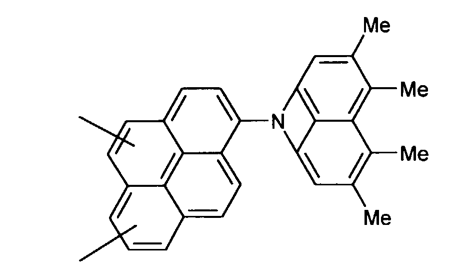 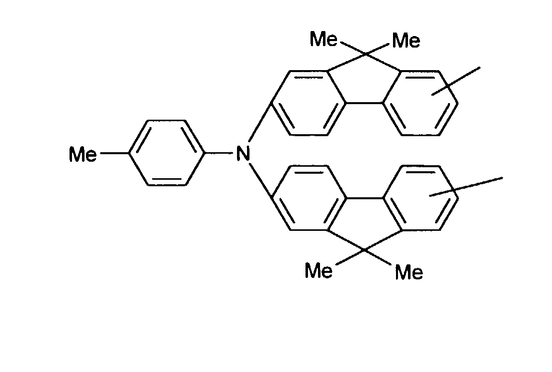 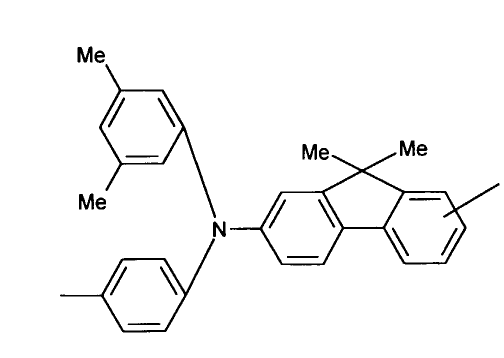 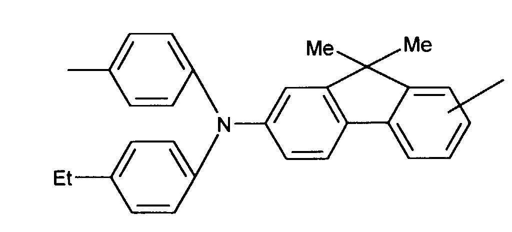 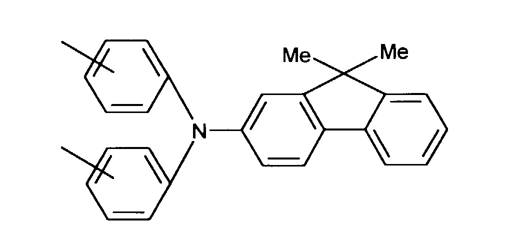 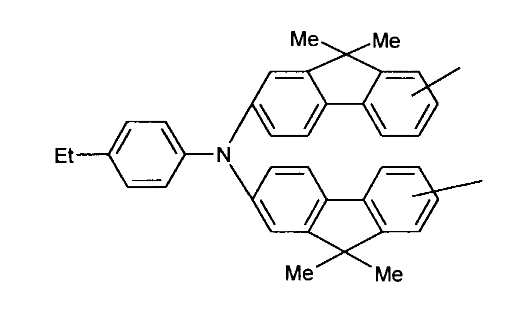 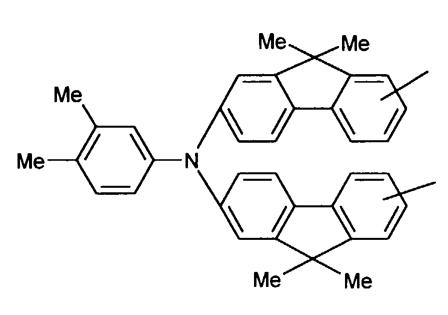 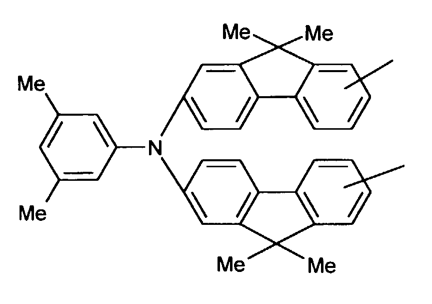 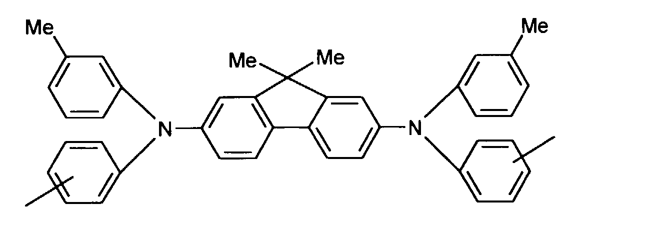 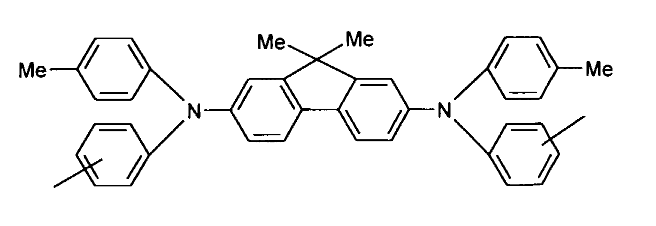 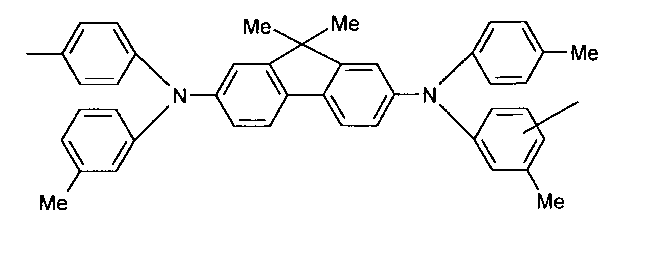 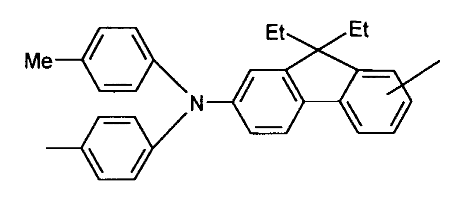 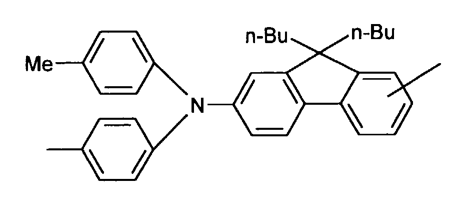 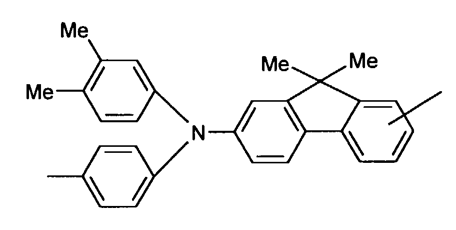 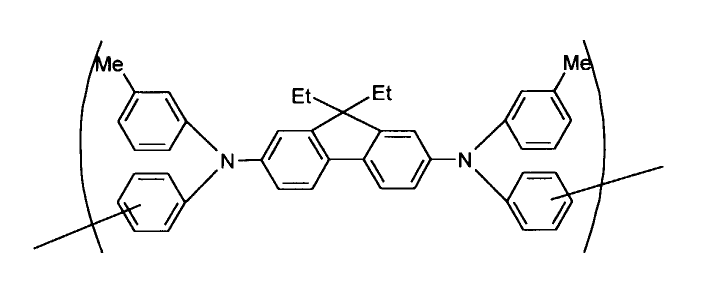 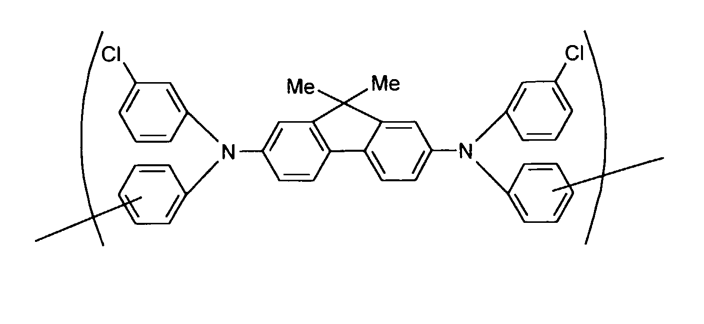 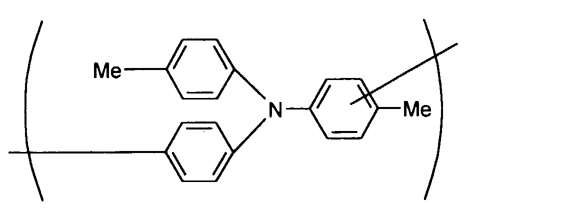 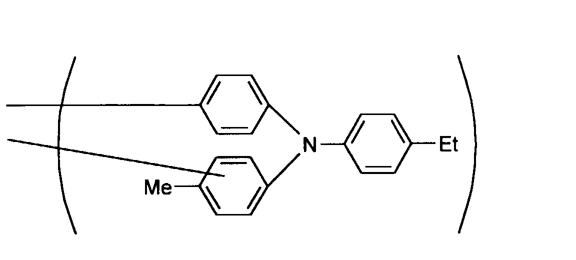 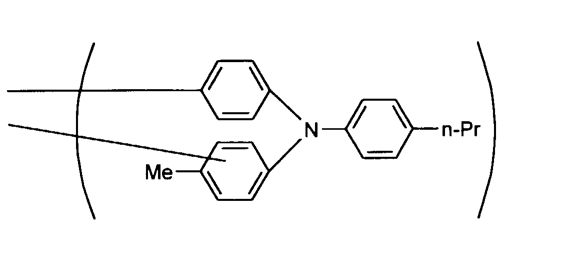 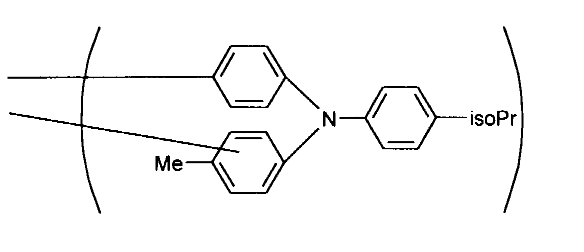 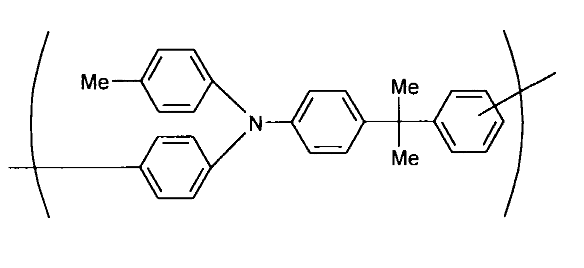 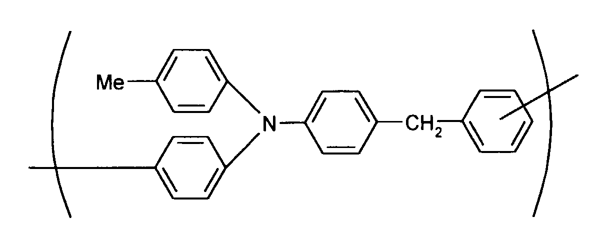 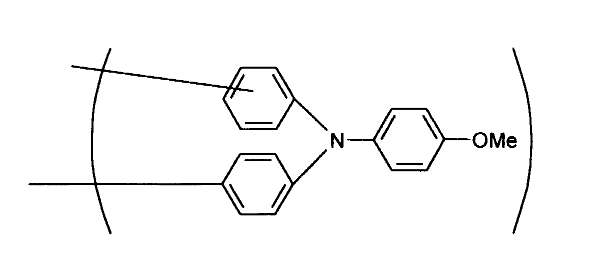 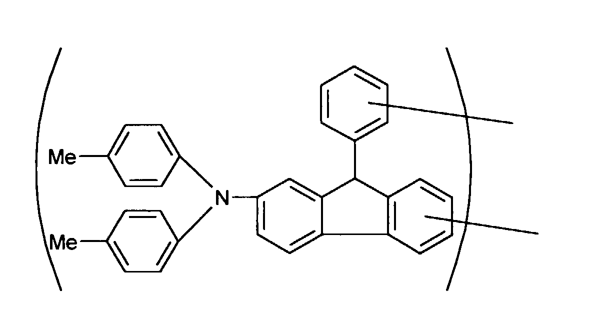 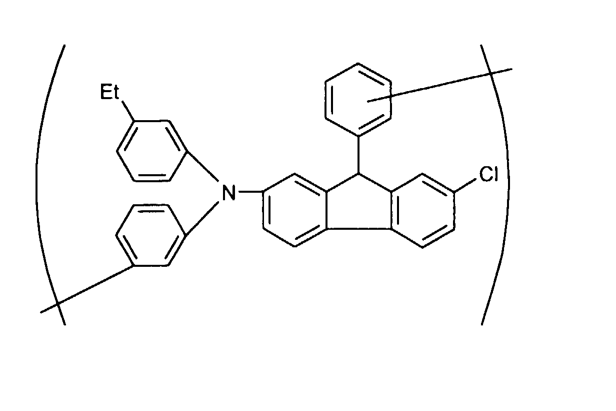 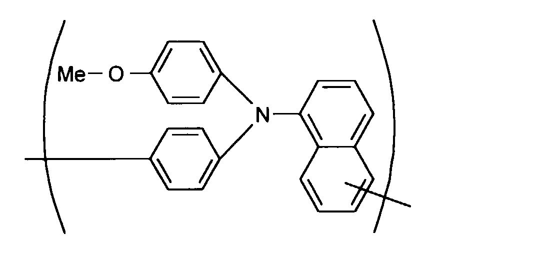 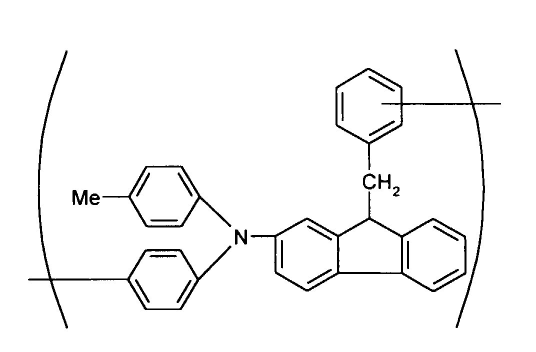 The group B denotes C₂ to C₆ alkylene and can be specifically exemplified by straight-chain and branched-chain alkylene groups such as ethylene, methylethylene, ethylethylene, propylethylene, butylethylene, propylene, butylene, 1-methylpropylene, pentylene, and hexylene, among which ethylene, propylene, butylene, and hexylene are preferred. R¹ denotes unsubstituted and halogen-substituted C₁ to C₁₀ monovalent hydrocarbon groups that lack aliphatic unsaturation. R¹ can be specifically exemplified by alkyl groups such as methyl, ethyl, propyl, butyl, pentyl, and hexyl; aryl groups such as phenyl, tolyl, and xylyl; aralkyl groups such as benzyl and phenethyl; and fluorinated hydrocarbon groups such as trifluoropropyl, nonafluorohexyl, and heptadecafluorooctyl. Methyl and phenyl are preferred among the preceding for R¹. R² is an alkyleneoxyalkylene group or an unsubstituted or alkoxy-substituted C₂ to C₁₀ divalent hydrocarbon group. The alkyleneoxyalkylene can be exemplified by ethyleneoxyethylene, while the divalent hydrocarbon group can be exemplified by straight-chain and branched-chain alkylene such as ethylene, methylethylene, ethylethylene, propylethylene, butylethylene, propylene, butylene, 1-methylpropylene, pentylene, and hexylene, and by phenylene groups such as p-phenylene, m-phenylene, o-phenylene, 2-methyl-1,4-phenylene, 2-methoxy-1,4-phenylene, and 2-ethoxy-1,4-phenylene. Ethylene and p-phenylene are preferred among the preceding for R². The subscript **x** is an integer with a value of at least 1; the subscripts **y** and **z** are each integers with a value of at least 0; and (**y** + **z**) is at least 2. In addition, (**x** + **y** + **z**) must have a value that gives a weight-average molecular weight for the silicon-containing aromatic polymer under consideration of no more than 1,000,000. In specific terms, **x** is preferably in the range from 1 to 2,000 and more preferably is in the range from 2 to 1,000; **y** is preferably in the range from 2 to 2,000 and more preferably is in the range from 2 to 1,000; and **z** will as a general rule be in the range from 0 to 1,000.

The molecular chain terminals of the silicon-containing aromatic polymer according to the present invention are not critical and can be, for example, the hydrogen atom, the hydroxyl group, a hydrolyzable group such as an alkoxy group, a substituted or unsubstituted monovalent hydrocarbon group, or a silyl group with the formula R⁷ ₃-Si-(Q)ₚ- in which each R⁷ is independently selected from the hydrogen atom, hydrolyzable groups, and substituted and unsubstituted monovalent hydrocarbon groups; **p** is 0 or 1; and Q is an oxygen atom or a substituted or unsubstituted divalent hydrocarbon group. The weight-average molecular weight of the subject silicon-containing aromatic polymer should generally be in the range from 1,000 to 1,000,000 and is preferably in the range from 5,000 to 500,000.

The silicon-containing aromatic polymer according to the present invention as described hereinabove can be exemplified by compounds with the following structures, in which Ph represents p-phenylene and Me represents methyl.

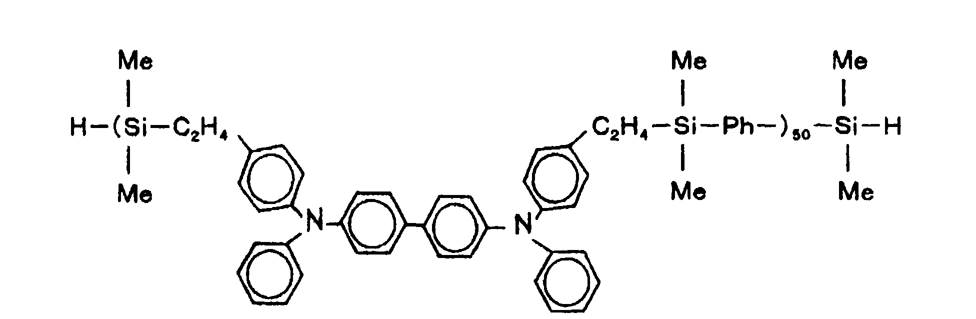

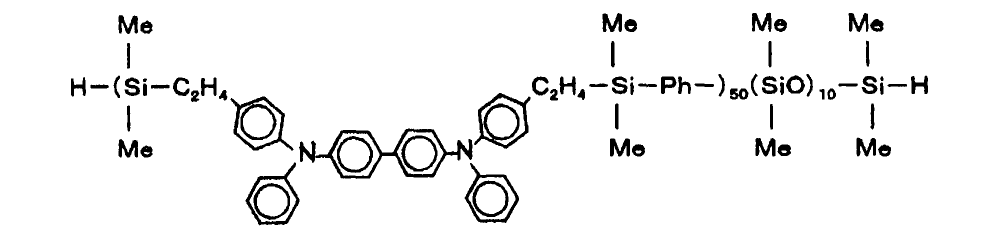

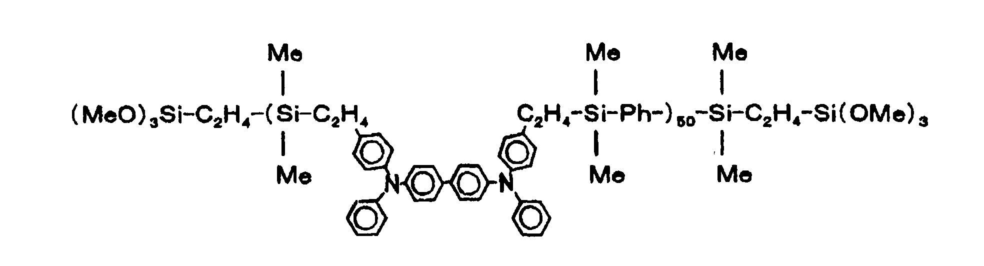

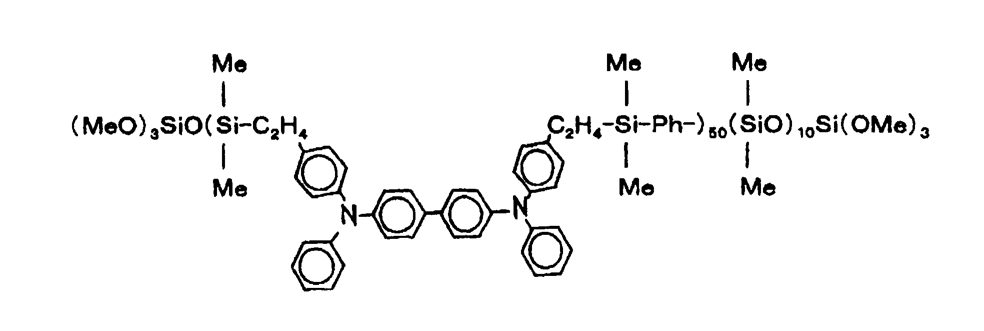

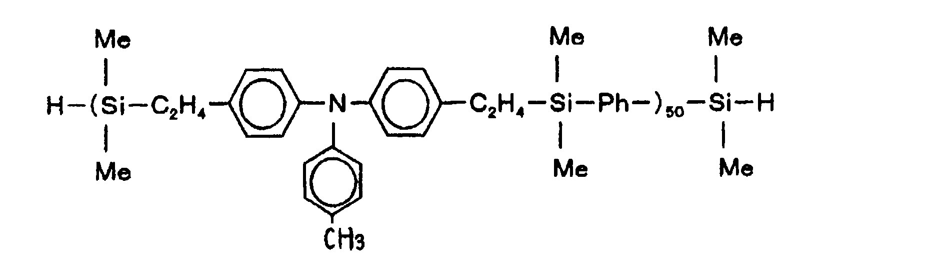

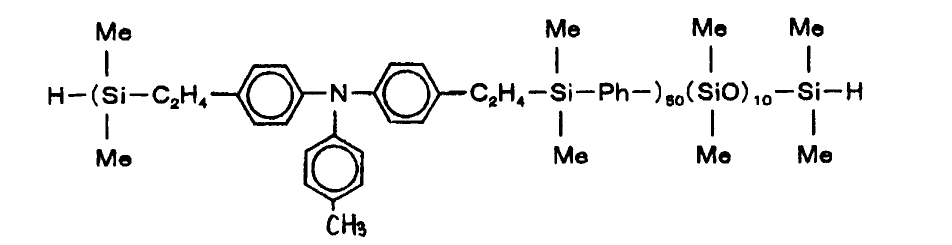

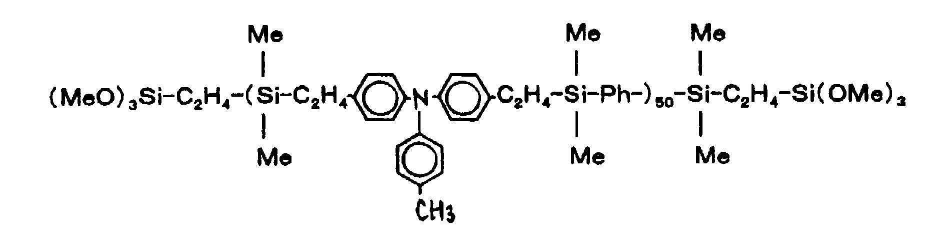

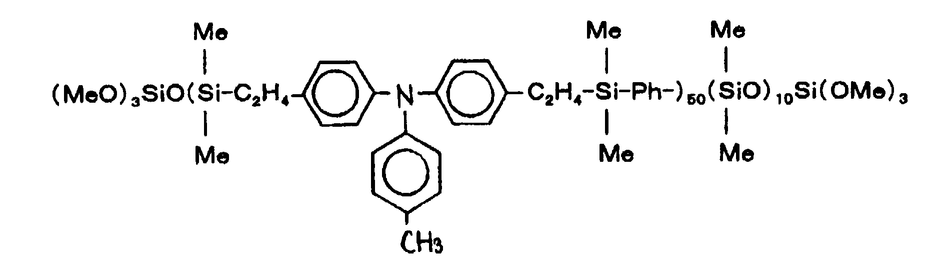

The method for synthesizing silicon-containing aromatic polymer according to the present invention will now be considered in detail hereinbelow.

The synthesis method according to the present invention is characterized by the execution of addition polymerization in the presence of a hydrosilylation catalyst between an aromatic compound with general formula (F2) (F2) B¹-A-B¹ in which A is defined as above and B¹ denotes C₂ to C₆ alkenyl
and
an organosilicon compound with general formula (F3) 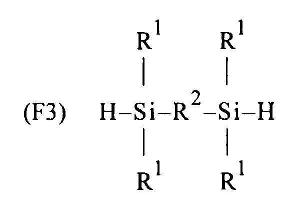 in which R¹ and R² are defined as above
or
a disiloxane compound with general formula (F4) 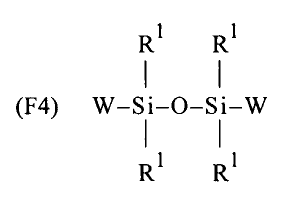 in which R¹ is defined as above and W is the hydrogen atom or C₂ to C₆ alkenyl. This addition polymerization can also be run using both the organosilicon compound (F3) and the disiloxane compound (F4).

The aromatic compound used in the synthesis method according to the present invention has the general formula (F2): B¹-A-B¹. B¹ in this formula is C₂ to C₆ alkenyl, and can be specifically exemplified by vinyl, allyl, and 5-hexenyl, while A is defined as above. This aromatic compound can be exemplified by the following compounds.

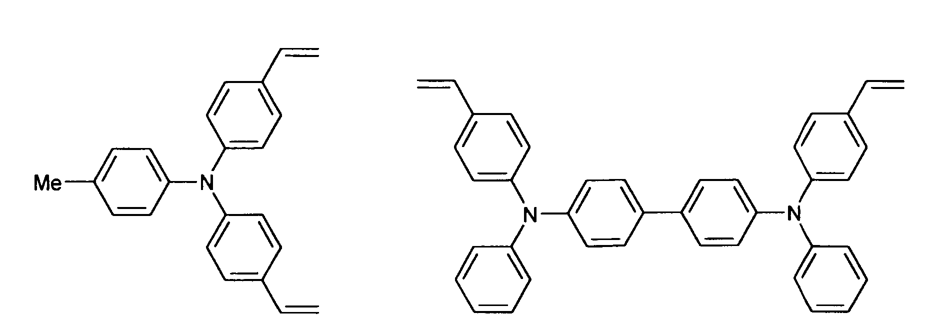

The R¹ and R² in the organosilicon compound with general formula (F3) 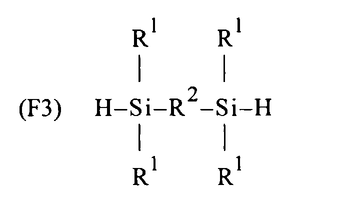 that is used in the synthesis method according to the present invention are defined as above. This organosilicon compound (F3) can be specifically exemplified by the following compounds, in which Ph indicates p-phenylene, Me indicates methyl, and C₆H₅ indicates the phenyl group.

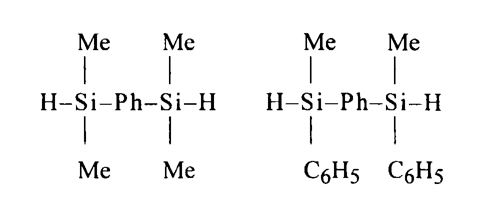

In the case of the disiloxane compound with general formula (F4) 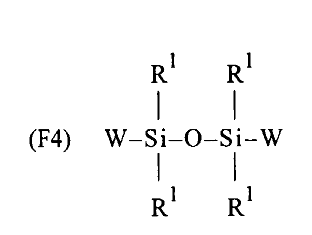 that is used in the synthesis method according to the present invention, W is the hydrogen atom or C₂ to C₆ alkenyl, while R¹ is defined as above. This disiloxane compound can be specifically exemplified by the compounds given below, in which Me indicates methyl and C₆H₅ indicates the phenyl group.

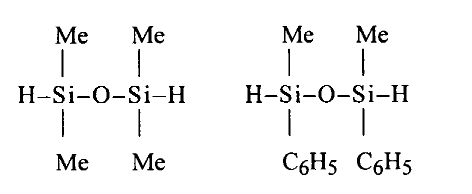

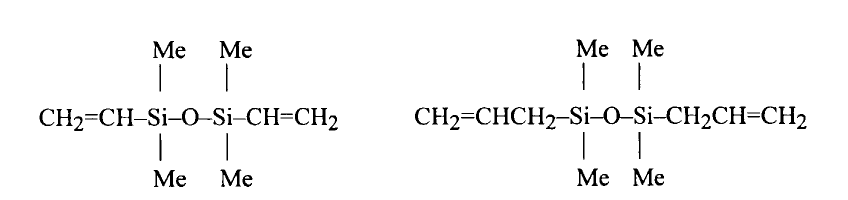

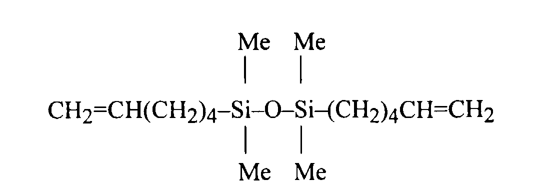

The hydrosilylation catalyst used in the synthesis method according to the present invention is preferably a supported or unsupported platinum catalyst, for which specific examples are platinum black, platinum supported on silica micropowder, platinum supported on carbon powder, chloroplatinic acid, alcohol solutions of chloroplatinic acid, platinum/vinylsiloxane complexes, and platinum/olefin complexes. These hydrosilylation catalysts are preferably added in an amount that provides from 0.1 to 2,000 ppm platinum metal. Subsequent to the reaction, the platinum catalyst can be removed by filtration after it has been adsorbed by the addition with mixing of, for example, active carbon, silica gel, aminosilane-treated silica gel, and mercaptosilane-treated silica gel.

The synthesis method according to the present invention also encompasses execution of the addition polymerization using combinations of each of the already described compounds with an organosilicon compound with general formula (F5) 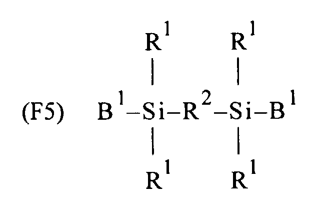 in which R¹, R², and B¹ are defined as above. This organosilicon compound (F5) can be exemplified by the following compounds, in which Me designates methyl and C₆H₄ designates p-phenylene.

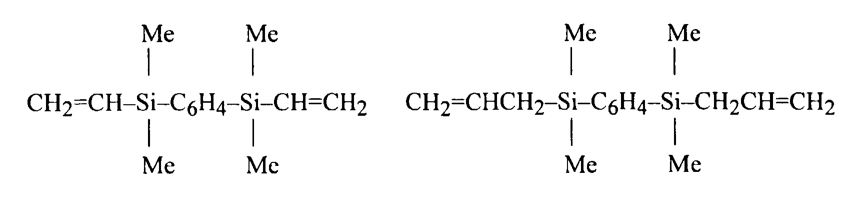

The polymerization terminator used in the synthesis method according to the present invention is preferably an organosilicon compound that contains both alkoxy and SiH or an organosilicon compound that contains both alkoxy and C₂-C₆ alkenyl. This polymerization terminator can be exemplified by the following silane compounds, in which Me indicates methyl and Vi indicates vinyl.

HSi(OMe)₃

HSi(OC₂H₅)₃

HMeSi(OMe)₂

HMeSi(OC₂H₅)₂

HMe₂SiOMe

ViSi(OMe)₃

ViSi(OC₂H₅)₃

ViMeSi(OMe)₂

ViMeSi(OC₂H₅)₂

ViMe₂SiOMe

CH₂=CHCH₂Si(OMe)₃

CH₂=CHCH₂Si(OC₂H₅)₃

CH₂=CHCH₂SiMe(OMe)₂

CH₂=CH(CH₂)₄SiMe(OC₂H₅)₂

CH₂=CH(CH₂)₄SiMe(OMe)₂

CH₂=CH(CH₂)₄Si(OMe)₃

Any sequence of component introduction can be employed in the synthesis method according to the present invention. The addition polymerization can also be run by mixing already prepared organic solvent solutions of each component and then running the reaction. Usable as the organic solvent are, for example, aromatic solvents such as benzene, toluene, and xylene; aliphatic solvents such as cyclohexane, methylcyclohexane, and dimethylcyclohexane; chlorinated solvents such as trichloroethylene, 1,1,1-trichloroethane, carbon tetrachloride, and chloroform; aliphatically saturated hydrocarbon solvents such as hexane and technical gasoline; ethers such as diethyl ether and tetrahydrofuran; ketone solvents such as methyl isobutyl ketone; fluorinated solvents such as α,α,α-trifluorotoluene and hexafluoroxylene; and volatile silicones such as hexamethyldisiloxane, hexamethylcyclotrisiloxane, and octamethylcyclotetrasiloxane. Organic solvent, if used, is preferably blended in a quantity that will give 5 to 90 weight% silicon-containing aromatic polymer according to the present invention.

The main chain of the silicon-containing aromatic polymer according to the present invention as described hereinabove has a structure in which silicon and a charge-transporting group are bonded, wherein said charge-transporting group contains at least 1 nitrogen atom and at least 3 six-membered aromatic rings. Utilization of the corresponding charge-transport capacity enables application of the inventive polymer in a number of channels, for example, in antistatic applications, as a photosensitive sensor, and as a photodegradable polymer. Another advantage offered by the silicon-containing aromatic polymer of this invention is that its molecular weight can be easily adjusted at the time of synthesis since the polymer has a straight-chain structure. Moreover, this polymer has a rigid main chain and in general exhibits the properties of a solid at room temperature while also being soluble in many organic solvents. As a consequence, the inventive polymer is characterized by the ability to form a hard film on various substrate surfaces through dissolution in organic solvent and casting and drying of the resulting solution. Alkoxy-endblocked silicon-containing aromatic polymer of this invention is particularly useful for various types of coatings because it crosslinks at high density with the substrate surface to form a very hard film.

### EXAMPLES

This invention will be explained in greater detail through the working examples that follow, in which Me indicates the methyl group.

### Example 1

0.8 g (4 mmol) 1,4-bis(dimethylsilyl)phenylene with the following structure 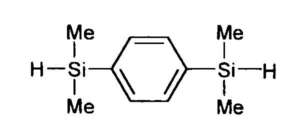 and 2 g toluene were introduced into a flask fitted with a stirrer, thermometer, and reflux condenser, into which sufficient platinum/divinyltetramethyldisiloxane complex solution was then added, while stirring the contents of the flask at 40 to 50°C, to provide 30 ppm platinum metal in the system. A mixed solution of 8 g toluene and 2.1 g (4 mmol) of the compound with the structure 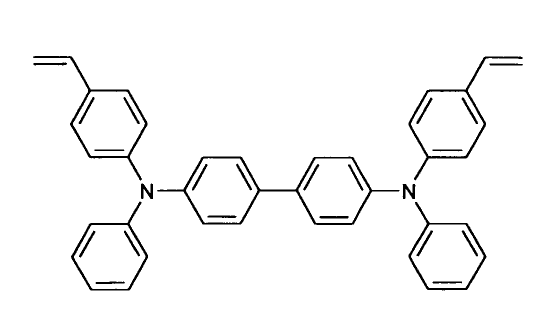 was then added dropwise and an addition polymerization was run for 6 hours with stirring. The volatile fraction was subsequently removed under reduced pressure to give 2.7 g of a reaction product that was solid at room temperature. This reaction product, which was obtained in a yield of 94%, was submitted to analysis by gel permeation chromatography (GPC), Fourier-transform infrared spectroscopy (FT-IR), ¹³C-nuclear magnetic resonance analysis (¹³C-NMR), and ²⁹Si-nuclear magnetic resonance analysis (²⁹Si-NMR), the results of which confirmed it to be silicon-containing aromatic polymer with the following structural formula.

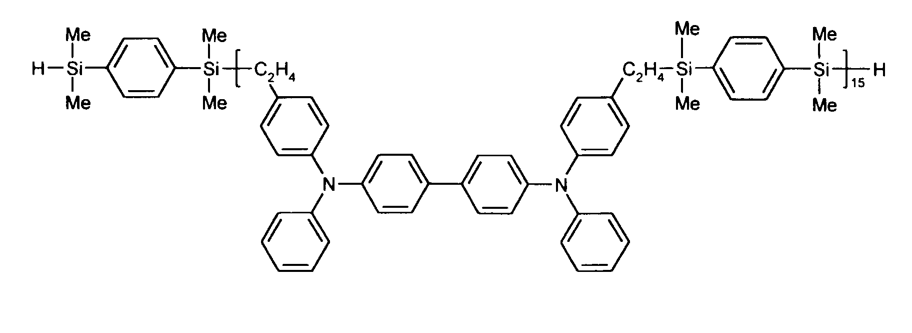

### Example 2

1.7 g (8.7 mmol) 1,4-bis(dimethylsilyl)phenylene with the following structure 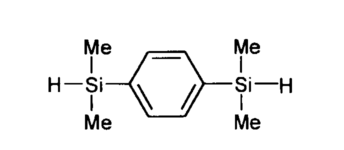 and 3 g toluene were introduced into a flask fitted with a stirrer, thermometer, and reflux condenser, into which sufficient platinum/divinyltetramethyldisiloxane complex solution was then added, while stirring the contents of the flask at 50°C, to provide 30 ppm platinum metal in the system. A mixed solution of 10 g toluene and 4.27 g (7.9 mmol) of the compound with the structure 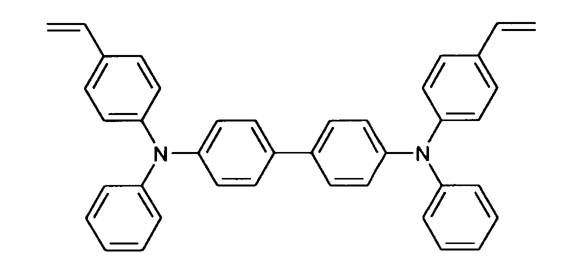 was then added dropwise and heating was carried out for 2 hours. This was followed by the introduction of 0.43 g (2.9 mmol) vinyltrimethoxysilane and heating for another 1 hour. The volatile fraction was subsequently removed under reduced pressure to give 6 g of a reaction product that was solid at room temperature. This reaction product, which was obtained in a yield of 94%, was submitted to analysis by GPC, FT-IR, ¹³C-NMR, and ²⁹Si-NMR, the results of which confirmed it to be silicon-containing aromatic polymer with the following structural formula.

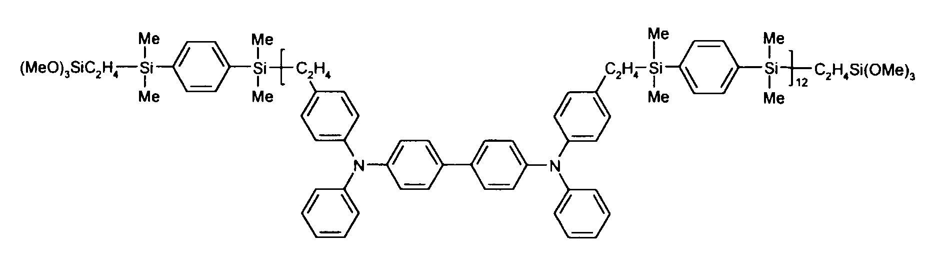

### Advantageous Effects of the Invention

The silicon-containing aromatic polymer of this invention is a novel compound whose main chain is built up from the silicon atom and an organic group that contains at least 1 nitrogen atom and at least 3 six-membered aromatic rings. A characteristic feature of this polymer is its capacity to engage in charge transport. The synthesis method of this invention characteristically enables the high-productivity synthesis of the inventive silicon-containing aromatic polymer.

## Claims

1. A silicon-containing aromatic polymer comprising a polymer having a weight-average molecular weight no greater than 1,000,000 and a main chain as defined by units of the general formula (F1) 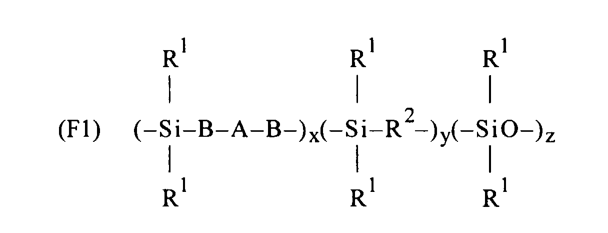 wherein A denotes a divalent organic group selected from the following structures 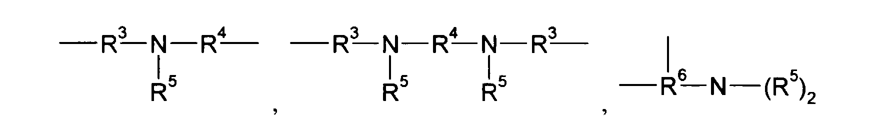 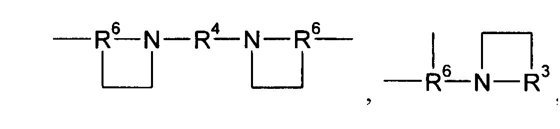 or 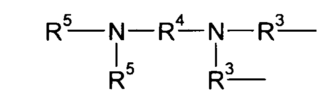 in which R³ and R⁴ denote substituted and unsubstituted divalent hydrocarbon groups, R⁵ denotes substituted and unsubstituted monovalent hydrocarbon groups, and R⁶ denotes substituted and unsubstituted trivalent hydrocarbon groups, wherein at least 1 of the preceding is an aromatic hydrocarbon ring-containing group and A contains a total of at least 3 six-membered aromatic rings, and
B denotes C₂ to C₆ alkylene, R¹ denotes unsubstituted and halogen-substituted C₁ to C₁₀ monovalent hydrocarbon groups that lack aliphatic unsaturation, R² is an alkyleneoxyalkylene group or an unsubstituted or alkoxy-substituted C₂ to C₁₀ divalent hydrocarbon group, the subscript **x** is an integer with a value of at least 1, the subscripts **y** and **z** are each integers with a value of at least 0, and (**y** + **z**) is at least 2.

2. The silicon-containing aromatic polymer of Claim 1 in which A is a charge-transporting group.

3. A method for synthesizing the silicon-containing aromatic polymer of claim 1, said method comprising effecting addition polymerization in the presence of a hydrosilylation catalyst between an aromatic compound with general formula (F2)
(F2) B¹-A-B¹
wherein A denotes a divalent organic group selected from the following structures 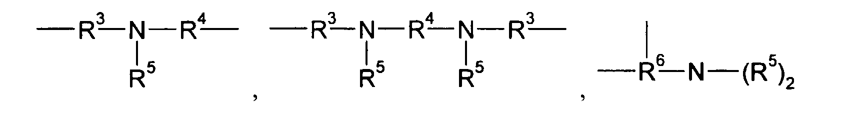 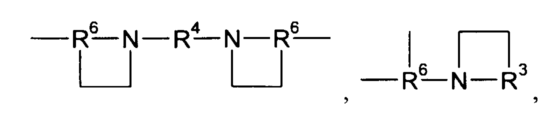 or 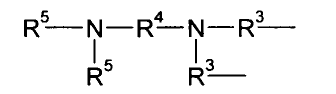 in which R³ and R⁴ denote substituted and unsubstituted divalent hydrocarbon groups, R⁵ denotes substituted and unsubstituted monovalent hydrocarbon groups, and R⁶ denotes substituted and unsubstituted trivalent hydrocarbon groups, wherein at least 1 of the preceding is an aromatic hydrocarbon ring-containing group and A contains a total of at least 3 six-membered aromatic rings and
B¹ denotes C₂ to C₆ alkenyl
and
an organosilicon compound with general formula (F3) 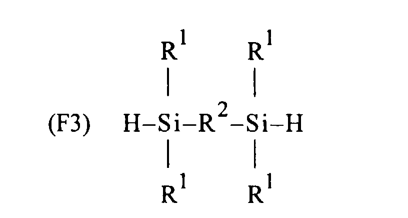 in which R¹ denotes unsubstituted and halogen-substituted C₁ to C₁₀ monovalent hydrocarbon groups that lack aliphatic unsaturation and R² is an alkyleneoxyalkylene group or an unsubstituted or alkoxy-substituted C₂ to C₁₀ divalent hydrocarbon group
or
a disiloxane compound with general formula (F4) 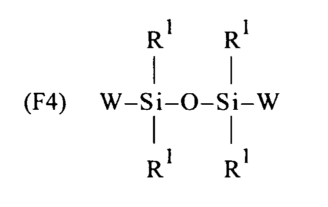 in which R¹ denotes unsubstituted and halogen-substituted C₁ to C₁₀ monovalent hydrocarbon groups that lack aliphatic unsaturation and W is the hydrogen atom or C₂ to C₆ alkenyl.

4. The method of Claim 3 for synthesizing silicon-containing aromatic polymer, that uses as polymerization terminator an organosilicon compound that contains both alkoxy and silicon-bonded hydrogen or an organosilicon compound that contains both alkoxy and C₂-C₆ alkenyl.

5. The method of Claim 3 for synthesizing silicon-containing aromatic polymer, in which A is a charge-transporting group.

6. The method of claim 4 for synthesizing silicon-containing aromatic polymer, in which A is a charge-transporting group.
